# EUROPEAN PATENT APPLICATION

(11) **EP 4 772 065 A1**
(43) Date of publication of application: **08.07.2026**
(21) Application number: 24857926.0
(22) Date of filing: 06.06.2024
(51) Int. Cl.: A44B 11/25

(54) **LOCKING BUCKLE ASSEMBLY**

(30) Priority: 31.08.2023 CN 202322358146 U
(71) Applicant: Autoliv Development AB, 44783 Vargarda (SE)
(72) Inventor: LIN, Guoping, Shanghai 201807 (CN); HE, Xinyun, Shanghai 201807 (CN)
(74) Representative: Müller Verweyen
(86) International application number: PCT/CN2024/097740
(87) International publication number: WO 2025/044381

(57) **Abstract**

Provided in the present invention is a buckle assembly. The buckle assembly includes a buckle, a tongue, and a Hall assembly configured to detect whether the tongue is inserted into the buckle. The Hall assembly is fixed into an inner cavity of the buckle, and includes a chip, a magnet, and a housing, and the chip and the magnet overlap and are spaced apart in a predetermined direction. The housing includes a first positioning portion configured to position the chip at a first position and a second positioning portion configured to position the magnet at a second position. The first positioning portion includes a cover, a base, and a first snap-fit member rotatably connected to one of the two. The cover and the base define a first accommodating space configured to accommodate the chip. When the first snap-fit member rotates to a first rotation position, the first accommodating space is opened. When the first snap-fit member rotates to a second rotation position, the first snap-fit member applies a force to a first side surface of the chip, to enable a second side surface of the chip opposite to the first side surface to abut against a first stopper provided on the first positioning portion.

## Description

### TECHNICAL FIELD

The present invention relates to a safety apparatus for a vehicle, and in particular, to a buckle assembly for a seat belt.

### BACKGROUND ART

A seat belt in a vehicle is a safety apparatus. The seat belt is configured to restrain an occupant during a collision, and to avoid a secondary collision between the occupant and a steering wheel, a dashboard, and the like during the collision, or to prevent the occupant from being thrown out of the vehicle during the collision, thereby causing death or injury. The seat belt for the vehicle may also be referred to as a seat safety belt, and is an occupant restraint apparatus. The seat belt restrains the occupant seated on a seat by means of a webbing pulled out from a seat belt retractor and thus is configured to protect the occupant by securing the occupant to the seat in the event of a vehicle collision or the like. As one type of seat belt, when an acceleration exceeding a specified value in the horizontal direction acts in the event of a vehicle collision or the like, the acceleration is detected by an acceleration sensor, and a seat belt locking mechanism is activated, so that the seat belt cannot be pulled out.

The seat belt is mounted on the seat of the vehicle by means of a buckle assembly, and the buckle assembly is usually provided with a detection apparatus for detecting whether the occupant has fastened the seat belt.

It is desirable to provide a buckle assembly with a detection component that is easily accessible and maintainable, where the detection component is configured to detect whether an occupant has fastened a seat belt.

### SUMMARY OF THE INVENTION

An object of the present invention is to provide a buckle assembly having a Hall assembly that is easily accessible and maintainable, where the Hall assembly is configured to detect whether an occupant has fastened a seat belt.

The present invention provides a buckle assembly, comprising a buckle, a tongue, and a Hall assembly configured to detect whether the tongue is inserted into the buckle,
wherein
the Hall assembly is fixed into an inner cavity of the buckle and comprises a chip, a magnet, and a housing, and the chip and the magnet overlap and are spaced apart in a predetermined direction,
the housing comprises a first positioning portion configured to position the chip at a first position and a second positioning portion configured to position the magnet at a second position,
the first positioning portion comprises a cover, a base, and a first snap-fit member rotatably connected to one of the two, and the cover and the base define a first accommodating space configured to accommodate the chip,
when the first snap-fit member rotates to a first rotation position, the first accommodating space is opened; and when the first snap-fit member rotates to a second rotation position, the first snap-fit member applies a force to a first side surface of the chip, to enable a second side surface of the chip opposite to the first side surface to abut against a first stopper provided on the first positioning portion.

According to an embodiment of the present invention, the first snap-fit member is provided to be rotatably connected to the cover, the base is provided with a first stepped portion, and the first stepped portion serves as the first stopper.

According to an embodiment of the present invention, the cover is provided with a first rib portion, to apply a force to a top surface of the chip, to bring a bottom surface of the chip into contact with the base.

According to an embodiment of the present invention, the cover and/or the base is further provided with a pair of side edges opposite to each other, and the pair of side edges are respectively provided opposite to a third side surface and a fourth side surface of the chip that are opposite to each other.

According to an embodiment of the present invention, the second positioning portion comprises a second snap-fit member and a second stopper, the second snap-fit member and the second stopper define a second accommodating space configured to accommodate the magnet, and the second snap-fit member applies a force to a first side surface of the magnet, to enable a second side surface of the magnet opposite to the first side surface to abut against the second stopper.

According to an embodiment of the present invention, the second stopper is provided in the form of a second stepped portion, and the second snap-fit member is provided with a second rib portion to apply a force to a bottom surface of the magnet, to bring a top surface of the magnet into contact with the second stopper.

According to an embodiment of the present invention, the second accommodating space comprises two sidewalls and a pair of rib-shaped limiting portions respectively located on the sidewalls, to limit a position of the magnet.

According to an embodiment of the present invention, a sidewall of the housing is provided with a first groove and a second groove spaced apart by a predetermined distance, and an input terminal and an output terminal of the chip are respectively positioned in the first groove and the second groove.

According to an embodiment of the present invention, the housing is provided with a first predetermined path and a second predetermined path, and a first cable and a second cable are respectively electrically connected to the input terminal and the output terminal of the chip via the first predetermined path and the second predetermined path; and
the first predetermined path and the second predetermined path are defined by a locking portion in the form of an open clamp acting on the first cable and the second cable.

According to an embodiment of the present invention, the predetermined direction is perpendicular to an insertion direction in which the tongue is inserted into the buckle.

### BRIEF DESCRIPTION OF THE DRAWINGS

The features, advantages, and technical effects of exemplary embodiments of the present invention will be described below with reference to the accompanying drawings. In the accompanying drawings, the same reference numbers denote the same elements, wherein
FIG. 1(a) and FIG. 1(b) separately show a Hall assembly in a buckle assembly according to an embodiment of the present invention.
FIG. 2 shows a housing of a Hall assembly in a buckle assembly according to an embodiment of the present invention.
FIG. 3(a) and FIG. 3(b) separately show a first positioning portion of a Hall assembly in a buckle assembly according to an embodiment of the present invention.
FIG. 4(a) and FIG. 4(b) separately show a second positioning portion of a Hall assembly in a buckle assembly according to an embodiment of the present invention.

### DETAILED DESCRIPTION OF PREFERRED EMBODIMENTS

Specific embodiments of a buckle assembly according to the present invention will be described below with reference to the accompanying drawings. The following detailed description and the accompanying drawings are used to exemplarily explain the principles of the present invention. The present invention is not limited to the described preferred embodiments, and various embodiments described in the present invention can be used individually or in any combination. The scope of protection of the present invention is defined by the claims.

In addition, terms for spatial relations (such as "upper", "lower", "left", "right", etc.) are used to describe a relative positional relationship between an element and another element shown in the accompanying drawings. Therefore, the terms for spatial relations may be applied to directions different from the directions shown in the accompanying drawings during use. Obviously, although all of these terms for spatial relations refer to the directions shown in the accompanying drawings for ease of explanation, a person skilled in the art will appreciate that directions different from the directions shown in the drawings may be used.

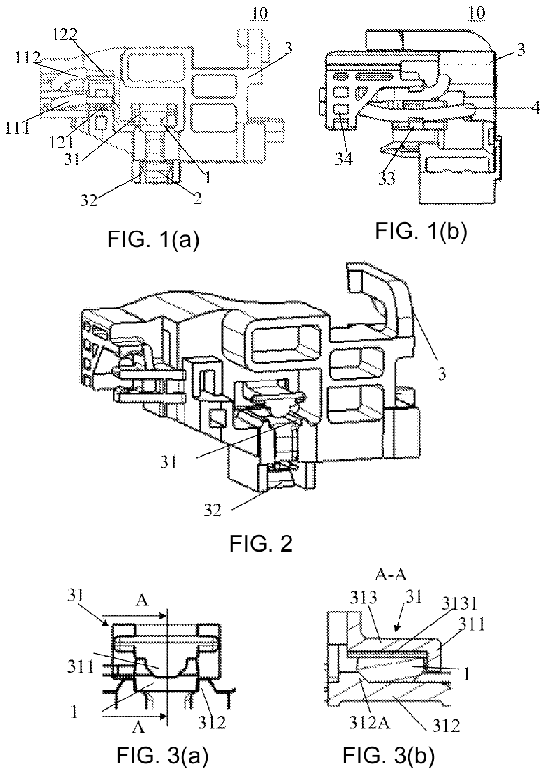

FIG. 1(a) and FIG. 1(b) separately show a Hall assembly in a buckle assembly according to an embodiment of the present invention. The buckle assembly, particularly the Hall assembly, according to the embodiments of the present invention is described below with reference to FIG. 1(a) and FIG. 1(b).

The present invention provides a buckle assembly. The buckle assembly includes a buckle and a tongue (both are not shown), and a Hall assembly 10 configured to detect whether the tongue is inserted into the buckle, as shown in FIG. 1(a) and FIG. 1(b). The Hall assembly 10 may be fixed into an inner cavity of the buckle. The inner cavity is, for example, an inner space defined by a housing of the buckle.

Still referring to FIG. 1(a) and FIG. 1(b), in the buckle assembly of the present invention, the Hall assembly 10 includes a chip 1, a magnet 2, and a housing 3. The chip 1 and the magnet 2 are fixed to the housing 3 at predetermined positions, and the chip 1 and the magnet 2 overlap and are spaced apart in a predetermined direction. For the Hall assembly 10 in an orientation shown in FIG. 1(a), the chip 1 and the magnet 2 are arranged one above the other, that is, the projection of the chip 1 in a vertical direction at least partially coincides with the magnet 2. When the tongue is inserted into the buckle, the tongue is inserted into a space between the chip 1 and the magnet 2 in an overlapping direction of the chip 1 and the magnet 2, causing a magnetic field of the magnet 2 to change, and enabling a current flowing through the chip 1 located in the magnetic field to change. Whether the tongue is inserted into the buckle and whether an occupant has fastened a seat belt are determined by obtaining different values of the current flowing through the chip 1. In an example, the chip and the magnet overlap in a direction perpendicular to an insertion direction in which the tongue is inserted into the buckle, that is, the predetermined direction is perpendicular to the insertion direction in which the tongue is inserted into the buckle. It can be understood that setting the predetermined direction to be perpendicular to the insertion direction in which the tongue is inserted into the buckle is conducive to sensitively sensing whether the tongue is inserted into the buckle.

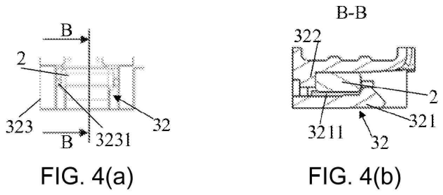

FIG. 2 shows a housing of a Hall assembly in a buckle assembly according to an embodiment of the present invention. FIG. 3(a) and FIG. 3(b) separately show a first positioning portion of a Hall assembly in a buckle assembly according to an embodiment of the present invention. FIG. 3(a) is a partial view of the Hall assembly, and FIG. 3(b) is a cross-sectional view along a line A-A in FIG. 3(a). FIG. 4(a) and FIG. 4(b) separately show a second positioning portion of a Hall assembly in a buckle assembly according to an embodiment of the present invention. FIG. 4(a) is a partial view of the Hall assembly, and FIG. 4(b) is a cross-sectional view along a line B-B in FIG. 4(a). The chip, the magnet, and the housing in the Hall assembly are described in further detail below with reference to FIG. 2, FIG. 3(a), FIG. 3(b), FIG. 4(a), and FIG. 4(b).

As shown in FIG. 2, the housing 3 includes a first positioning portion 31 and a second positioning portion 32. The first positioning portion 31 is configured to position the chip 1 at a first position, and the second positioning portion 32 is configured to position the magnet 2 at a second position. As described above, after the chip 1 is positioned at the first position of the housing 3 by means of the first positioning portion 31 and the magnet 2 is positioned at the second position of the housing 3 by means of the second positioning portion 32, the chip 1 and the magnet 2 overlap and are spaced apart in the predetermined direction.

Referring to FIG. 3(a) and FIG. 3(b), the first positioning portion 31 on the housing 3 includes a cover 313, a base 312, and a first snap-fit member 311 rotatably connected to the cover 313, and the cover 313 and the base 312 define a first accommodating space configured to accommodate the chip 1. It should be noted that, as shown in FIG. 2, the first accommodating space configured to accommodate the chip 1 is not a closed space, and the first accommodating space has a front opening (a front opening in FIG. 2) for insertion of the chip 1, and further has side openings (left openings in FIG. 2) configured to allow an output terminal and an input terminal of the chip 1 communicating with an external controller to pass through.

As shown in FIG. 3(a), an end portion of the first snap-fit member 311 pivotally connected to the cover 313 has a wide size, and the wide end portion is wider than the cover 313 and wider than a remaining portion of the first snap-fit member 311. It can be clearly observed from the figure that left and right sides of the wide end portion of the first snap-fit member 311 respectively extend beyond members adjacent thereto, so that a force can be conveniently applied to the wide end portion, thereby driving the first snap-fit member 311 to rotate. As shown in FIG. 3(b), if the first snap-fit member 311 rotates upward from a position shown in the figure and reaches a specific position, a right opening of the first accommodating space is opened. For convenience of description, the specific position to which the first snap-fit member 311 rotates upward is defined as a first rotation position, that is, when the first snap-fit member 311 rotates to the first rotation position, the first accommodating space is opened. In this case, the chip 1 may be taken out of or put into the first accommodating space. In addition, when the first snap-fit member 311 shown in FIG. 3(b) is at a second rotation position, the first snap-fit member 311 applies a force to a first side surface (a right side surface in FIG. 3(b)) of the chip 1, so that the chip 1 is placed at a predetermined position. Specifically, a second side surface (a left side surface in FIG. 3(b)) of the chip 1 opposite to the first side surface abuts against a first stopper 312A provided on the first positioning portion 31. That is, the chip 1 is positioned in a horizontal direction in FIG. 3(b) by means of the first buckle member 311 and the first stopper 312A. According to an embodiment of the present invention, the base 312 is provided with a first stepped portion, and the first stepped portion serves as the first stopper 312A. As shown in FIG. 3(b), a left side portion of the base 312 is raised upward relative to other portions to form the first stepped portion, and the left side surface of the chip 1 abuts against a right side of the first stepped portion of the base 312. Certainly, this is merely an example, and a first stopper in another form (for example, a protruding post) may alternatively be used in the Hall assembly in the buckle assembly of the present invention. In addition, although the above embodiments are described by using an example in which the first snap-fit member is rotatably connected to the cover, the present invention is not limited thereto. The first snap-fit member may alternatively be rotatably connected to the base. Such an arrangement can also position the chip on the housing.

In addition, as shown in FIG. 3(b), the cover 313 is provided with a first rib portion 3131, and the first rib portion is located between the cover 313 and the chip 1. For example, a plurality of spaced first rib portions 3131 are provided. The first rib portions 3131 apply a force to a top surface of the chip 1 to bring a bottom surface of the chip 1 into contact with the base 312. That is, the chip 1 is positioned in a vertical direction in FIG. 3(b) by means of the first rib portions 3131 and a right portion of the base 312.

In addition, as shown in FIG. 3(a), the cover 313 and the base 312 are further provided with a pair of side edges opposite to each other, and the pair of side edges are respectively provided opposite to a third side surface and a fourth side surface of the chip 1 (that is, the left side surface and the right side surface of the chip) that are opposite to each other, so that the third side surface and the fourth side surface of the chip 1 are respectively in contact with the cover 313 and the base 312. That is, the chip 1 is positioned in a front-rear direction in FIG. 3(b) by means of the side edges on the cover 313 and the base 312.

As shown in FIG. 4(a) and FIG. 4(b), the second positioning portion 32 includes a second snap-fit member 321 and a second stopper 322, and the second snap-fit member 321 and the second stopper 322 define a second accommodating space configured to accommodate the magnet 2. As shown in FIG. 4(b), the magnet 2 is already located in the second accommodating space. When the magnet 2 needs to be taken out, a force is applied to a hook portion (located at a right end in FIG. 4(b)) of the second snap-fit member 321 to deform the hook portion and open a right opening of the second accommodating space, and the magnet 2 is taken out of the second accommodating space through the right opening. When the magnet 2 needs to be placed in the second accommodating space, the right opening of the second accommodating space is also opened by applying a force to the hook portion of the second snap-fit member 321 to deform the hook portion, and the second snap-fit member 321 applies a force to a first side surface (a right side surface in FIG. 4(b)) of the magnet 2, so that a second side surface (a left side surface in FIG. 4(b)) of the magnet 2 opposite to the first side surface abuts against a second stopper 321. According to an embodiment of the present invention, the second stopper 322 is provided in the form of a second stepped portion. Certainly, this is merely an example, and a second stopper in another form (for example, a protruding post) may alternatively be used in the Hall assembly in the buckle assembly of the present invention.

As shown in FIG. 4(b), a left side portion of the second stopper 322 protrudes downward relative to other portions to form the second stepped portion, and the left side surface of the magnet 2 abuts against a right side of the second stepped portion of the second stopper 322. In addition, a right side portion of the second stopper 322 abuts against a top surface of the magnet 2. Correspondingly, as shown in FIG. 4(b), the second snap-fit member 321 is provided with a second rib portion 3211, and the second rib portion is provided between the second snap-fit member 321 and the magnet 2. For example, a plurality of spaced second rib portions 3211 are provided. The second rib portions 3211 apply a force to a bottom surface of the magnet 2 to bring the top surface of the magnet 2 into contact with the second stopper 322. That is, the magnet 2 is positioned in a vertical direction in FIG. 4(b) by means of the second rib portions 3211 and the right side portion of the second stopper 322, and the magnet 2 is positioned in a horizontal direction in FIG. 4(b) by means of the hook portion of the second snap-fit member 321 and the left side portion of the second stopper 322.

In addition, as shown in FIG. 4(a), the second accommodating space includes two sidewalls 323 and a pair of rib-shaped limiting portions 3231 respectively located on the sidewalls 323 to limit a position of the magnet 2. The pair of limiting portions 3231 are respectively provided opposite to two opposite side surfaces of the magnet 2, so that the two side surfaces of the magnet 2 are respectively in contact with the pair of limiting portions 3231. That is, the magnet 2 is positioned in the front-rear direction in FIG. 3(b) by means of the pair of limiting portions 3231.

Returning to FIG. 1(a) and FIG. 1(b), a sidewall of the housing 3 is provided with a first groove and a second groove that are spaced apart by a predetermined distance, and an input terminal 121 and an output terminal 122 of the chip 1 are respectively positioned in the first groove and the second groove. In addition, the housing 3 is provided with a first predetermined path and a second predetermined path, and a first cable 111 and a second cable 112 are respectively electrically connected to the input terminal 121 and the output terminal 122 of the chip 1 via the first predetermined path and the second predetermined path. In an example, as shown in FIG. 1(b), the first predetermined path and the second predetermined path are defined by a locking portion in the form of an open clamp 33 acting on the first cable 111 and the second cable 112. In addition, the housing 3 is further provided with a plurality of protrusions 34 protruding inward from an inner side surface of the housing to abut against the cables, thereby preventing undesired movement of the cables.

As described above, although the exemplary embodiments of the present invention have been described with reference to the accompanying drawings in the description, the present invention is not limited to the aforementioned specific embodiments, and the scope of protection of the present invention should be defined by the claims and equivalent meanings thereof.

## Claims

1. A buckle assembly, comprising a buckle, a tongue, and a Hall assembly (10) configured to detect whether the tongue is inserted into the buckle, **characterized in that**:
the Hall assembly (10) is fixed into an inner cavity of the buckle and comprises a chip (1), a magnet (2), and a housing (3), and the chip (1) and the magnet (2) overlap and are spaced apart in a predetermined direction,
the housing (3) comprises a first positioning portion (31) configured to position the chip (1) at a first position and a second positioning portion (32) configured to position the magnet (2) at a second position,
the first positioning portion (31) comprises a cover (313), a base (312), and a first snap-fit member (311) rotatably connected to one of the two, and the cover (313) and the base (312) define a first accommodating space configured to accommodate the chip (1),
when the first snap-fit member (311) rotates to a first rotation position, the first accommodating space is opened; and when the first snap-fit member (311) rotates to a second rotation position, the first snap-fit member (311) applies a force to a first side surface of the chip (1), to enable a second side surface of the chip (1) opposite to the first side surface to abut against a first stopper (312A) provided on the first positioning portion (31).

2. The buckle assembly according to claim 1, wherein the first snap-fit member (311) is provided to be rotatably connected to the cover (313), the base (312) is provided with a first stepped portion, and the first stepped portion serves as the first stopper (312A).

3. The buckle assembly according to claim 2, wherein the cover (313) is provided with a first rib portion (3131), to apply a force to a top surface of the chip (1), to bring a bottom surface of the chip (1) into contact with the base (312).

4. The buckle assembly according to claim 3, wherein the cover (313) and/or the base (312) is further provided with a pair of side edges opposite to each other, and the pair of side edges are respectively provided opposite to a third side surface and a fourth side surface of the chip (1) that are opposite to each other.

5. The buckle assembly according to claim 1, wherein the second positioning portion (32) comprises a second snap-fit member (321) and a second stopper (322), the second snap-fit member (321) and the second stopper (322) define a second accommodating space configured to accommodate the magnet (2), and the second snap-fit member (321) applies a force to a first side surface of the magnet (2), to enable a second side surface of the magnet (2) opposite to the first side surface to abut against the second stopper (322).

6. The buckle assembly according to claim 5, wherein the second stopper (322) is provided in the form of a second stepped portion, and the second snap-fit member (321) is provided with a second rib portion (3211) to apply a force to a bottom surface of the magnet (2), to bring a top surface of the magnet (2) into contact with the second stopper (322).

7. The buckle assembly according to claim 6, wherein the second accommodating space comprises two sidewalls (323) and a pair of rib-shaped limiting portions (3231) respectively located on the sidewalls (323), to limit a position of the magnet (2).

8. The buckle assembly according to claim 1, wherein a sidewall of the housing (3) is provided with a first groove and a second groove spaced apart by a predetermined distance, and an input terminal (121) and an output terminal (122) of the chip (1) are respectively positioned in the first groove and the second groove.

9. The buckle assembly according to claim 8, wherein the housing (3) is provided with a first predetermined path and a second predetermined path, and a first cable (111) and a second cable (112) are respectively electrically connected to the input terminal (121) and the output terminal (122) of the chip (1) via the first predetermined path and the second predetermined path; and
the first predetermined path and the second predetermined path are defined by a locking portion in the form of an open clamp (33) acting on the first cable and the second cable.

10. The buckle assembly according to claim 1, wherein the predetermined direction is perpendicular to an insertion direction in which the tongue is inserted into the buckle.
